# EUROPEAN PATENT APPLICATION

(11) **EP 2 098 277 A1**
(43) Date of publication of application: **09.09.2009**
(21) Application number: 09152088.2
(22) Date of filing: 04.02.2009
(51) Int. Cl.: B01D 53/04, A62B 19/00

(54) **Single manifold assembly for oxygen-generating systems**

(30) Priority: 20.02.2008 US 70647
(71) Applicant: Delphi Technologies, Inc., Troy, Michigan 48007 (US)
(72) Inventor: McClain, Michael S., Ortonville, MI 48462 (US)
(74) Representative: Denton, Michael John

(57) **Abstract**

A device for generating an oxygen-enriched gas for a user includes a sieve module including a housing having at least one sieve bed operatively disposed therein. The sieve bed(s) include a nitrogen-adsorption material configured to adsorb at least a portion of nitrogen gas from a feed gas introduced thereto, wherein when the nitrogen gas is adsorbed, the oxygen-enriched gas is generated. The generated oxygen-enriched gas includes a substantially higher concentration of oxygen gas than that of the feed gas. The device further includes a single manifold assembly connected to an end of the sieve module. The single manifold assembly includes at least one supply valve and at least one user delivery valve connected thereto. The single manifold assembly further includes a flow path for each of the at least one supply valve and the at least one user delivery valve.

## Description

### TECHNICAL FIELD

The present disclosure relates generally to oxygen generating devices and, more particularly, to a method and device for generating an oxygen-enriched gas for a user.

### BACKGROUND OF THE INVENTION

Oxygen generating devices are often used to produce an oxygen-enriched gas for a user. Oxygen generating devices typically include a gas fractionalization system configured to separate oxygen from other components (e.g., nitrogen) in a feed gas to produce the oxygen-enriched gas. The gas fractionalization system, for example, may include one or more sieve beds having a nitrogen-adsorbing material disposed therein and configured to adsorb at least nitrogen from the feed gas.

In many devices, the sieve beds are operatively disposed in a housing to form a unit, where the unit is often referred to as a sieve module. In some instances, the sieve module also includes at least two manifolds, where each supports one or more valves. Also, the manifolds are generally disposed at opposing ends of the sieve beds. Many sieve beds are also fluidly connected to an external oxygen storage reservoir located in the sieve module and/or in the housing, for storing the oxygen-enriched gas produced by the sieve beds.

### SUMMARY OF THE INVENTION

A device for generating an oxygen-enriched gas for a user includes a sieve module including a housing having at least one sieve bed operatively disposed therein. The sieve bed(s) include a nitrogen-adsorption material configured to adsorb at least a portion of nitrogen gas from a feed gas introduced thereto, wherein when the nitrogen gas is adsorbed, the oxygen-enriched gas is generated. The generated oxygen-enriched gas includes a substantially higher concentration of oxygen gas than that of the feed gas. The device further includes a single manifold assembly connected to an end of the sieve module. The single manifold assembly includes at least one supply valve and at least one user delivery valve connected thereto. The single manifold assembly further includes a flow path for each of the at least one supply valve and the at least one user delivery valve.

### BRIEF DESCRIPTION OF THE DRAWINGS

Features and advantages of the present disclosure will become apparent by reference to the following detailed description and drawings, in which like reference numerals correspond to similar, though perhaps not identical components. For the sake of brevity, reference numerals or features having a previously described function may or may not be described in connection with other drawings in which they appear.

Fig. 1 is a schematic diagram of an exemplary oxygen generating device;

Fig. 2 is a partially exploded, semi-schematic, perspective view of an embodiment of a sieve module of the oxygen generating system of Fig. 1;

Fig. 3 is a semi-schematic front view of a single manifold assembly of the sieve module of Fig. 2;

Fig 4 is a semi-schematic back view of the single manifold assembly of Fig. 3;

Fig. 5 is a semi-schematic perspective view of the opposite end of the sieve module of Fig. 2;

Fig. 6 is a schematic view of the sieve module of Fig. 2, showing feed gas and oxygen-enriched gas flow; and

Fig. 7 is a semi-schematic, cross-sectional view of another embodiment of the sieve module.

### DESCRIPTION OF THE PREFERRED EMBODIMENTS

Embodiment(s) of the device and method disclosed herein advantageously generate an oxygen-enriched gas for a user having a desirably high oxygen content, while the device/system used to generate the oxygen-enriched gas is generally smaller in size and/or weight than existing systems. This is accomplished by incorporating at least the supply valve(s) and the user delivery valve(s) of the device into a single manifold assembly. The single manifold assembly is disposed in the sieve module at an inlet end thereof, whereby all of the gases flow to and from the sieve module (i.e., the feed gas entering the sieve module and the product gas leaving the sieve module) at the same location. Localization of the valves in the device substantially reduces the length of the flow paths for the feed and product gases in the device, as well as the number of internal device components such as, e.g., additional manifolds, fittings, conduits, and/or the like. As a result, the overall size and/or the weight of the oxygen generating device according to embodiment(s) of the present disclosure are also reduced, which may be particularly beneficial in portable applications.

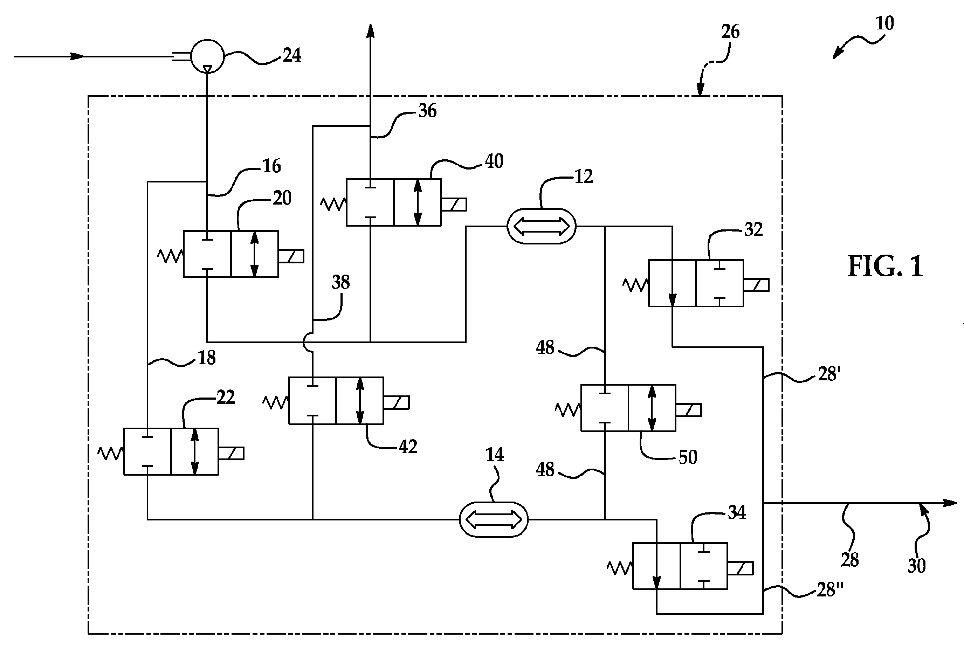

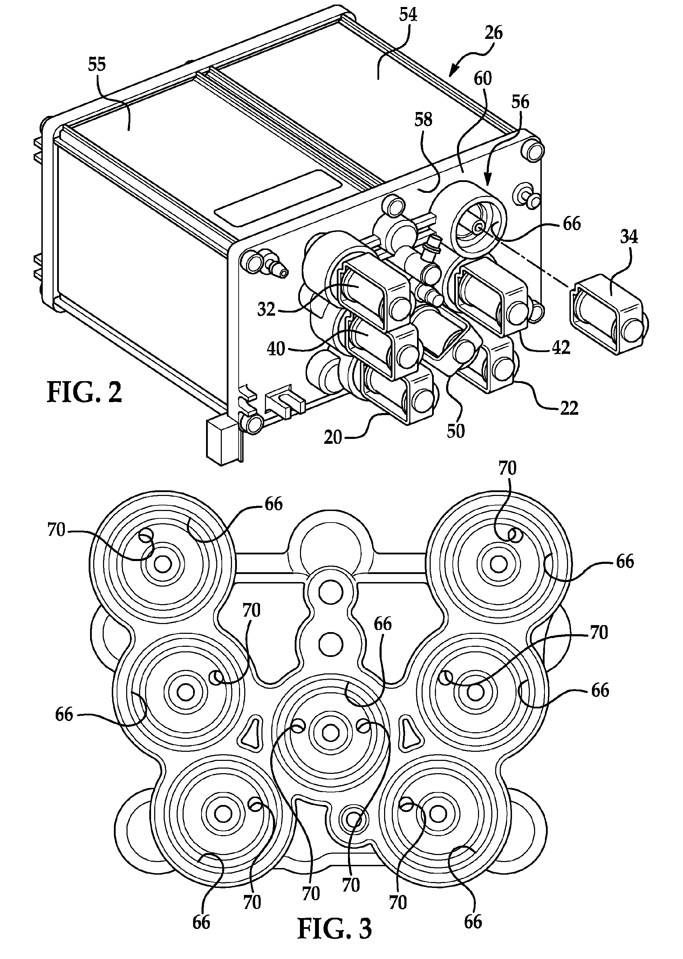

One non-limiting example of an oxygen generating system/device suitable for use with embodiment(s) of the method(s) and device(s) disclosed herein is depicted in Fig. 1. However, it is to be understood that any oxygen generating system may be suitable for use with the embodiment(s) of Figs. 2-7, various examples of which (not shown) are oxygen generating system(s) having fill valves (any suitable combination of 2-way, 3-way, 4-way valves, etc.), vent valves (any suitable combination of 2-way, 3-way, 4-way valves, etc.), a product tank(s), bleed orifice(s) and patient valving.

It is to be understood that the nitrogen-adsorption process employed by the oxygen generating system of Fig. 1 may be a pressure swing adsorption (PSA) process or a vacuum pressure swing adsorption (VPSA) process, and such processes operate in repeating adsorption/desorption cycles.

The oxygen generating device 10 includes an inlet configured to receive a feed gas from the ambient atmosphere, the feed gas generally including at least oxygen and nitrogen. The oxygen generating device 10 may include an inlet filter (not shown) disposed substantially adjacent to the inlet for filtering the feed gas as it enters the device 10 through the inlet.

The oxygen generating system includes at least one sieve bed. In the example shown in Fig. 1, the oxygen generating system 10 includes first 12 and second 14 sieve beds, each in selective fluid communication with a feed gas including at least oxygen, nitrogen, and water vapor. In a non-limiting example, the feed gas is air taken from the ambient atmosphere outside of the system 10. In an embodiment, each of the first 12 and second 14 sieve beds are configured to selectively receive the feed gas during a predetermined supply period. The first 12 and second 14 sieve beds may receive the feed gas via first 16 and second 18 supply conduits, respectively.

The first 16 and second 18 supply conduits are generally operatively connected to respective first 20 and second 22 supply valves (or inlet valves). In a non-limiting example, the first 20 and second 22 supply valves are two-way valves. As provided above, the nitrogen-adsorption process employed by the oxygen generating system 10 operates via cycles, where one of the first 12 or second 14 sieve beds vents purge gas (i.e. nitrogen-enriched gas), while the other of the first 12 or second 14 sieve beds delivers generated oxygen-enriched gas to the user. During the next cycle, the functions of the respective sieve beds 12, 14 switch. Switching is accomplished by opening the respective feed gas supply valve 20, 22 while the other of the supply valves 20, 22 is closed. In an embodiment, the opening and/or closing of the first 20 and second 22 supply valves may be controlled with respect to timing of opening and/or closing and/or with respect to the sequence in with the first 20 and second 22 supply valves are opened and/or closed.

In an embodiment, the feed gas is compressed via, e.g., a compressor 24 prior to entering the first 16 or second 18 supply conduits. In a non-limiting example, the compressor 24 is a scroll compressor. It is to be understood, however, that compression of the feed gas may be accomplished by any suitable compression means.

After receiving the feed gas, the first 12 and second 14 sieve beds are each configured to separate at least most of the oxygen from the feed gas to produce the oxygen-enriched gas. In an embodiment, the first 12 and second 14 sieve beds are each sieve beds 12, 14 including the nitrogen-adsorption material (e.g., zeolite, other similar suitable materials, and/or the like) configured to adsorb at least nitrogen from the feed gas. As schematically shown in phantom in Fig. 1, the sieve beds 12, 14 are operatively disposed in a housing and is generally referred to herein as a sieve module 26.

In a non-limiting example, the oxygen-enriched gas generated via either the PSA or VPSA processes includes a gas product having an oxygen content ranging from about 70 vol% to about 100 vol% of the total gas product. In another non-limiting example, the oxygen-enriched gas has an oxygen content of at least 87 vol% of the total gas product.

A user conduit 28 having a user outlet 30 is in alternate selective fluid communication with the first and second sieve beds 12, 14. The user conduit 28 may be formed from any suitable material, e.g., at least partially from flexible plastic tubing. In an embodiment, the user conduit 28 is configured substantially in a "Y" shape. As such, the user conduit 28 may have a first conduit portion 28' and a second conduit portion 28", which are in communication with the first sieve bed 12 and the second sieve bed 14, respectively, and merge together before reaching the user outlet 30. The user outlet 30 may be an opening in the user conduit 28 configured to output the substantially oxygen-enriched gas for user use. The user outlet 30 may additionally be configured with a nasal cannula, a respiratory mask, or any other suitable device, as desired.

The first conduit portion 28' and the second conduit portion 28" may be configured with a first user delivery valve 32 and a second user delivery valve 34, respectively. In an embodiment, the first 32 and the second 34 user delivery valves are configured as two-way valves. It is contemplated that when the oxygen-enriched gas is delivered from one of the first and second sieve beds 12, 14, to the user conduit 28, the respective one of the first 32 or second 34 user delivery valves is open. Further, when the respective one of the first 32 or second 34 user delivery valves is open, the respective one of the first 20 or second 22 feed gas supply valves is closed.

The nitrogen-adsorption process selectively adsorbs at least nitrogen from the feed gas. Generally, the compressed feed gas is introduced into one of the first 12 or the second 14 sieve beds, thereby pressurizing the respective first 12 or second 14 sieve bed. Nitrogen and possibly other components present in the feed gas are adsorbed by the nitrogen-adsorption material disposed in the respective first 12 or second 14 sieve bed during an appropriate PSA/VPSA cycle. After: a predetermined amount of time; reaching a predetermined target pressure; detection of an inhalation; and/or another suitable trigger, the pressure of the respective first 12 or second 14 sieve bed is released. At this point, the nitrogen-enriched gas (including any other adsorbed components) is also released from the respective first 12 or second 14 sieve bed and is vented out of the system 10 through a vent port/conduit for the respective first 12 or second 14 sieve bed. As shown in Fig. 1, the nitrogen-enriched gas in the first sieve bed 12 is vented through the vent conduit 36 when a first vent valve 40 is open, and the nitrogen-enriched gas in the second sieve bed 14 is vented through the vent conduit 38 when a second vent valve 42 is open. It is to be understood that venting occurs after each dynamically adjusted oxygen delivery phase and after counterfilling, each of which will be described further below. The gas not adsorbed by the nitrogen-adsorption material (i.e., the oxygen-enriched gas) is delivered to the user through the user outlet 30.

In an embodiment, delivery of the oxygen-enriched gas occurs during or within a predetermined amount of time after the dynamically adjusted oxygen delivery phase from the respective first 12 or second 14 sieve bed. For example, the oxygen delivery system 10 may be configured to trigger an output of a predetermined volume of the oxygen-enriched gas from the sieve bed 12 upon detection of an inhalation by the user. Detection of an inhalation may be accomplished by any suitable means. The predetermined volume, which is at least a portion of the oxygen-enriched gas produced, is output through the user conduit 28 and to the user outlet 30 during a respective dynamically adjusted oxygen delivery phase.

The first 12 and second 14 sieve beds are also configured to transmit at least a portion of the remaining oxygen-enriched gas (i.e., the oxygen-enriched gas not delivered to the user during the delivery phase to the user outlet 30), if any, to the other of the first 12 or second 14 sieve bed. This also occurs after each respective dynamically adjusted oxygen delivery phase. The portion of the remaining oxygen-enriched gas may be transmitted via a counterfill flow conduit 48. The transmission of the remaining portion of the oxygen-enriched gas from one of the first 12 or second 14 sieve beds to the other first 12 or second 14 sieve beds may be referred to as "counterfilling."

As shown in Fig. 1, the counterfill flow conduit 48 may be configured with a counterfill flow valve 50. In a non-limiting example, the counterfill flow valve 50 is a two-way valve. The counterfill flow valve 50 is opened to allow the counterfilling of the respective first 12 and second 14 sieve beds.

Referring now to Figs. 2-5, the sieve module 26 includes a single manifold assembly 56 operatively connected to an input end 58 (which also serves as an outlet end, as discussed below) thereof. The single manifold assembly 56 is operatively connected to the sieve module 26 via, e.g. a header plate 60.

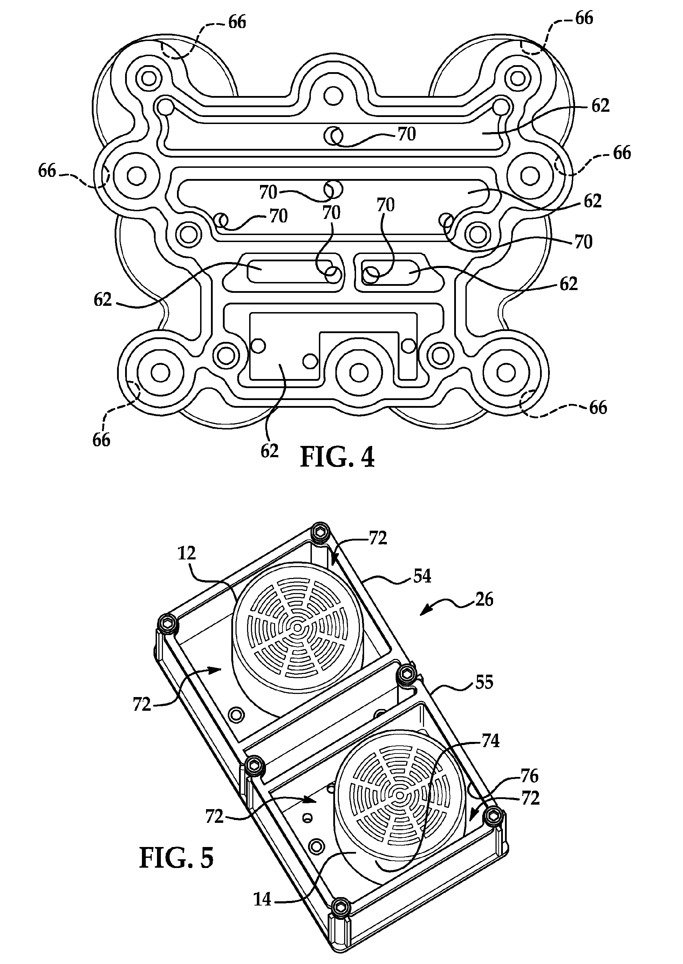

Referring also to Figs. 3 and 4, the single manifold assembly 56 includes at least two manifolds 62 in selective fluid communication with a respective at least two valve receiving receptacles 66 having at least one flow path 70 formed therein. Each valve receiving receptacle 66 is configured to operatively receive a valve therein (one valve is shown exploded away from valve receiving receptacle 66 in Fig. 2). It is to be understood that each of the manifolds 62, through the valve receiving receptacles 66, is in operative fluid communication with its respective valve(s).

It is to be understood that many configurations (and any number and type of valves and corresponding valve receiving receptacles 66) are contemplated as being within the purview of the present disclosure. However, for purposes of illustration, the embodiment depicted in Figs. 3 and 4 includes five manifolds 62 respectively operatively connected, via the valve receiving receptacles 66, to one or more of the first 20 and the second 22 supply valves, the first 32 and second 34 user delivery valves, the first 40 and second 42 purge valves, and the counterfill flow valve 50.

As shown in Fig. 5, the first 54 and second 55 housing sections generally each include a volume that is substantially greater than its respective sieve bed 12, 14 disposed therein. The first 12 and second 14 sieve beds further include an oxygen-enriched gas storage space 72 formed respectively between them and the housing sections 54, 55. The respective sieve bed 12, 14 plus the storage space 72 form an integral sieve column. As such, the oxygen-enriched gas is directly related or integral to the oxygen production in the respective sieve bed 12, 14 and is also stored within the same respective sieve column within which it is produced. Some advantages over a PSA system that has a separate (and external from the sieve bed) storage/product tank is that embodiment(s) of the present disclosure are capable of much higher oxygen concentration levels in a faster time period, while also having better ability for blow down or purge of substantially pure oxygen into another depressurizing or venting sieve column. These advantages are possible, at least in part, because the oxygen is stored directly in the sieve column. Further advantages include the need for less overall space in the system/device 10, fewer components, and potential cost savings in components.

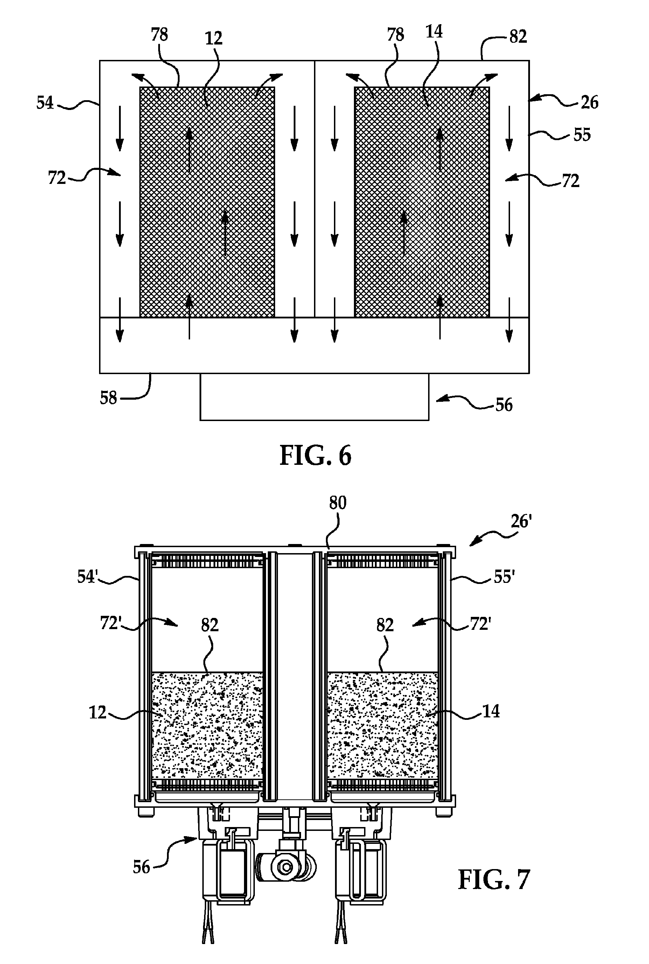

In an embodiment, as shown in Figs. 5 and 6, the space 72 substantially surrounds the respective sieve bed 12, 14 and is defined between an exterior surface 74 of the sieve bed 12, 14 and an interior of a wall 76 of the respective housing section 54, 55. As mentioned above, it is to be understood that the volume of the space 72 is generally dependent on the amount of oxygen-enriched gas generated by the sieve bed 12, 14. In some instances, the volume of the space 72 is larger than the volume of the sieve bed 12, 14. In these instances, the amount of oxygen-enriched gas generated is substantially high. In other instances, the volume of the space 72 is smaller than the volume of the sieve bed 12, 14. In these instances, however, the amount of oxygen-enriched gas generated may be substantially low. In a non-limiting example, the volume of each space 72 ranges from about 20 mL to about 1,000 mL. In the embodiment depicted in Fig. 5, the volume of the respective sieve bed 12, 14 is substantially the same as the volume of the corresponding space 72 that surrounds it.

With reference now to Fig. 6, the feed gas enters, e.g., the first sieve bed 12 through the first 20 feed gas supply valve at the input end 58 of the sieve module 26. As provided above, at least nitrogen is adsorbed by the nitrogen-adsorption material in the sieve bed 12, thereby producing the oxygen-enriched gas. The oxygen-enriched gas leaves the sieve bed 12 at an opposing end 82 of the sieve module 26 and is received in the space 72.

Prior to a delivery phase of the oxygen delivery process, the user delivery valve 32 is closed and the oxygen-enriched gas produced by the sieve bed 12 is stored in the space 72. During a delivery phase, however, the user delivery valve 32 is opened, and the oxygen-enriched gas produced flows through the space 72, and flows through the user conduit 28 for delivery thereof to the user. It is to be understood that when the oxygen-enriched gas leaves the sieve module 26 through the user delivery valve 32, it leaves through the inlet end 58 of the sieve module 26. It is further to be understood that the end 58 is used for the flow of both the feed gas and the product gas, which substantially reduces the size and number of flow paths for these gases in the device 10, as well as the number of internal components used in the device 10. As a result, the device 10 may be made substantially smaller in size and substantially lighter in weight.

In another embodiment, as shown in Fig. 7, the first 54' and second 55' housing sections of the sieve module 26' have a distal end 80 from an opposing end 82 of the sieve beds 12, 14, respectively. The housing sections 54', 55' each have a volume that is substantially greater than that of its respective sieve bed 12, 14 such that the area defined between the end 82 of the sieve bed 12, 14 and the distal end 80 forms each respective space 72'. The volume of the space 72' is also substantially the same as the volume of the respective sieve bed 12, 14. As in the embodiment of Fig. 5, the sieve bed 12, 14 with its respective storage space 72' each form an integral sieve column (i.e. sieve bed 12 with its storage space 72' forms one integral sieve column, and sieve bed 14 with its storage space 72' forms another integral sieve column).

It is to be understood that, during each cycle of the nitrogen-adsorption process, the single manifold assembly 56 is heated as the feed gas flows into the sieve module 26 and oxygen-enriched gas flows out of the sieve module 26. As the nitrogen-enriched gas purges from the sieve module 26, at least a portion of the heat from the manifold assembly 56 is also purged from the device 10. In effect, the manifold assembly 56 is advantageously substantially cooled during the purging stage of each nitrogen-adsorption process cycle.

It is also contemplated that the manifold assembly 56 may be configured or designed to distribute and/or shed the heat substantially evenly throughout the manifold assembly 56. This may be accomplished, e.g., via convection cooling with cooling fins, and/or fabricating the manifold assembly 56 from materials with high heat transfer rate properties (non-limiting examples of which include aluminum, and alloys of aluminum, copper, brass, tin, or the like, similar to materials used in radiators and air cooled engines).

It is to be understood that the term "connect/connected" is broadly defined herein to encompass a variety of divergent connection arrangements and assembly techniques. These arrangements and techniques include, but are not limited to (1) the direct connection between one component and another component with no intervening components therebetween; and (2) the connection of one component and another component with one or more components therebetween, provided that the one component being "connected to" the other component is somehow operatively connected to the other component (notwithstanding the presence of one or more additional components therebetween).

While several embodiments have been described in detail, it will be apparent to those skilled in the art that the disclosed embodiments may be modified and/or other embodiments may be possible. Therefore, the foregoing description is to be considered exemplary rather than limiting.

## Claims

1. A device for generating an oxygen-enriched gas for a user, comprising:
a sieve module including a housing having at least one sieve bed operatively disposed therein, the sieve bed including a nitrogen-adsorbing material configured to adsorb at least a portion of a nitrogen gas from a feed gas introduced thereto, wherein when the nitrogen gas is adsorbed, the oxygen-enriched gas is generated, the oxygen-enriched gas including a substantially higher concentration of oxygen gas than that of the feed gas; and
a single manifold assembly connected to an end of the sieve module, wherein the single manifold assembly includes at least one supply valve and at least one user delivery valve connected thereto, and wherein the single manifold assembly further includes a flow path for each of the at least one supply valve and the at least one user delivery valve.

2. The device as defined in claim 1 wherein the housing has an end distal from an end of the at least one sieve bed, and the housing has a volume that is substantially greater than that of the at least one sieve bed such that the area defined between the end of the sieve bed and the housing distal end forms a space configured to selectively store the oxygen-enriched gas, the storage space and the at least one sieve bed forming an integral sieve column.

3. The device as defined in claim 1 wherein the housing has a volume that is substantially greater than that of the sieve bed, and wherein a space configured to selectively store the oxygen-enriched gas substantially surrounds the at least one sieve bed and is defined between an exterior surface of the at least one sieve bed and an interior wall of the housing, the storage space and the at least one sieve bed forming an integral sieve column.

4. The device as defined in claim 2 or claim 3 wherein the volume of the oxygen-enriched gas storage space is substantially the same as the volume of the at least one sieve bed.

5. The device as defined in claim 3 wherein the oxygen-enriched gas storage space is configured to receive the oxygen-enriched gas generated from the sieve bed and, when the at least one user delivery valve is closed, the oxygen-enriched gas storage space is further configured to store the oxygen-enriched gas therein.

6. The device as defined in claim 3 wherein the oxygen-enriched gas storage space is configured to receive the oxygen-enriched gas generated from the sieve bed and, when the at least one user delivery valve is open, the oxygen-enriched gas received in the oxygen-enriched storage space flows through the at least one user delivery valve and for delivery to the user.

7. The device as defined in claim 1 wherein the single manifold assembly further includes a purge valve connected thereto, the purge valve being configured to purge nitrogen-enriched gas from the device.

8. The device as defined in claim 7 wherein during the oxygen-enriched gas generating process, the purge valve is further configured to purge at least a portion of heat from the device when the nitrogen-enriched gas is purged from the device.

9. The device as defined in claim 8 wherein the single manifold assembly is selected from a material configured to distribute or shed the heat substantially evenly throughout the manifold assembly.

10. The device as defined in claim 1 wherein there are a plurality of manifolds operatively disposed in the single manifold assembly, each of the plurality of manifolds being respectively in operative fluid communication with at least one valve.

11. A method of delivering an oxygen-enriched gas to a user, the method comprising:
providing an oxygen generating device, including:
a sieve module including a housing having at least one sieve bed operatively disposed therein, the at least one sieve bed including a nitrogen-adsorbing material disposed therein; and
a single manifold assembly connected to an end of the sieve module, the single manifold assembly including at least one supply valve and at least one user delivery valve connected thereto, and wherein the single manifold assembly further includes a flow path for each of the at least one supply valve and the at least one user delivery valve;
introducing a feed gas including at least nitrogen and oxygen to the at least one sieve bed via the at least one supply valve connected to the single manifold assembly;
generating the oxygen-enriched gas in the at least one sieve bed by adsorbing the nitrogen from the feed gas; and
removing the oxygen-enriched gas from the sieve module via the at least one user delivery valve connected to the single manifold assembly.

12. The method as defined in claim 11 wherein the sieve module further includes an oxygen-enriched gas storage space, and wherein the method further comprises:
receiving the oxygen-enriched gas in the oxygen-enriched gas storage space; and
at least one of: storing the oxygen-enriched gas in the oxygen-enriched gas storage space when the at least one user delivery valve is closed; or allowing the oxygen-enriched gas to be delivered to the user when the at least one user delivery valve is open.

13. The method as defined in claim 12 wherein the receiving the oxygen-enriched gas in the oxygen-enriched gas storage space is accomplished by:
removing the oxygen-enriched gas from the at least one sieve bed at an outlet end of the sieve bed, the outlet end being opposed to an inlet end of the sieve bed; and
introducing the oxygen-enriched gas into the oxygen-enriched gas storage space.

14. The method as defined in claim 11 wherein the single manifold assembly further includes a purge valve connected thereto, and wherein the method further comprises:
releasing the adsorbed nitrogen from the at least one sieve bed, thereby generating nitrogen-enriched gas; and
purging the nitrogen-enriched gas from the oxygen generating device via the purge valve.

15. The method as defined in claim 14, further comprising:
heating the single manifold assembly during the oxygen generating process; and
purging at least a portion of the heat during the purging of the nitrogen-enriched gas from the device.
